# EUROPÄISCHE PATENTSCHRIFT

(11) **EP 1 120 073 B1**
(45) Veröffentlichungstag und Bekanntmachung des Hinweises auf die Patenterteilung: **21.04.2004**
(21) Anmeldenummer: 00125171.9
(22) Anmeldetag: 18.11.2000
(51) Int. Cl.: A47J 43/07

(54) **Arbeitsbehälter für eine Küchenmaschine**
Mixing bowl for a kitchen apparatus
Bol pour appareil électroménager

(30) Priorität: 27.01.2000 DE 10003448
(43) Veröffentlichungstag der Anmeldung: 01.08.2001
(73) Patentinhaber: Braun GmbH, 61476 Kronberg (DE)
(72) Erfinder: Börger, Georg, 61449 Steinbach (DE); Ring, Martin, Dr., 61749 Glashütten (DE); Müller, Wolfgang, 65824 Schwalbach (DE)

(56) Entgegenhaltungen:
- DE-A- 19 721 302
- DE-U- 8 403 562

## Beschreibung

Die Erfindung betrifft einen Arbeitsbehälter für eine Küchenmaschine gemäß dem Oberbegriff des Patentanspruchs 1 sowie ein Verfahren zu dessen Herstellung.

Aus dem Stand der Technik sind eine Vielzahl von Arbeitsbehältern für Küchenmaschinen bekannt. Größtenteils sind diese aus Kunststoff hergestellt. Dies ist vor allem aus Gestaltungsgesichtspunkten vorteilhaft. Insbesondere läßt sich bei im Spritzgußverfahren hergestellten Arbeitsbehältern in einfacher Weise eine zentrale Werkzeugwellendurchführung realisieren.

Aus Gründen der Haltbarkeit, der Formstabilität und der Ästhetik ist aber auch die Verwendung von Edelstahlarbeitsbehältern in Einzelfällen bekannt. Im Gegensatz zu den Arbeitsbehältern aus Kunststoff ist hier jedoch die Herstellung erheblich schwieriger, da die im Tiefziehverfahren hergestellten Arbeitsbehälter bei vertretbarem Kostenaufwand nur eine begrenzte Verformbarkeit aufweisen.

Ein Beispiel für einen derartigen Arbeitsbehälter beschreibt die DE 197 21 302 A1. Darin wird eine Arbeitsschüssel für eine motorische Küchenmaschine beschrieben, deren Schüsselwandung und Boden aus Edelstahl hergestellt sind, und aus deren Bodenmitte ein Dom nach oben hervorragt, in dessen hohlem Inneren eine Werkzeugwelle drehbar geführt ist. Am in den Behälterboden integrierten Domfuß sind dabei Endabschnitte vorgesehen, die in ein Befestigungsteil eingreifen. Dabei ist das Befestigungsteil aus Kunststoff hergestellt. Das Befestigungsteil ist als Befestigungshülse durch eine zentrale Öffnung der Arbeitsschüssel hindurchgeführt und wird von einer Domhülse, die ebenfalls aus Kunststoff hergestellt ist, umgeben.

Bei der in der DE 197 21 302 A 1 beschriebenen Lösung ist die Verbindung zwischen Befestigungsteil und Arbeitsschüssel lediglich mittels einer Steck- und Klemmverbindung realisiert. Dies kann nicht nur zu Stabilitätsproblemen, sondern auch zu Dichtungsproblemen, die aus hygienischen Gründen vermieden werden sollten, führen. Ferner wird der ästhetische Eindruck durch das nach außen hin als Kunststoffteil erkennbare Befestigungsteil abgewertet.

Aufgabe der vorliegenden Erfindung ist es daher, eine kostengünstige und einfach herstellbare Lösung zur Verfügung zu stellen, die die Nachteile des Standes der Technik vermeidet. Durch die erfindungsgemäße Lösung soll eine verbesserte Stabilität der Verbindung zwischen Behälterkörper und Behälterfuß gewährleistet und die Dichtigkeit zwischen Behälterkörper und Behälterfuß verbessert werden. Dabei soll ein ästhetisch hochwertiger Eindruck vermittelt werden.

Diese Aufgabe wird durch einen Arbeitsbehälter mit den Merkmalen des Patentanspruchs 1 und ein Verfahren zu dessen Herstellung mit den Merkmalen des Patentanspruchs 13 gelöst. Vorteilhafte Ausgestaltungen der Erfindung werden in den Unteransprüchen beschrieben.

Durch die erfindungsgemäße Lösung wird ein kostengünstig und einfach herstellbarer Arbeitsbehälter für eine Küchenmaschine zur Verfügung gestellt, der die Nachteile des Standes der Technik vermeidet. Insbesondere bietet der erfindungsgemäße Arbeitsbehälter eine verbesserte Stabilität der Verbindung zwischen Behälterkörper und Behälterfuß und vermeidet Dichtigkeitsprobleme zwischen Behälterkörper und Behälterfuß. Der Behälterfuß dient zum Aufstellen und Befestigen des Arbeitsbehälters an der Küchenmaschine. Durch die Verwendung einer Metallschürze, insbesondere aus Edelstahl, wird ein ästhetisch hochwertiges Produkt zur Verfügung gestellt. Der Behälterkörper kann dabei beispielsweise aus einem tiefziehfähigem Edelstahl hergestellt sein.

Durch eine vorteilhafte Ausführungsform mit den Merkmalen des Patentanspruchs 2 wird sichergestellt, daß der Behälterkörper in Richtung der Behälterkörpermittelachse mit dem Behälterfuß arretierbar ist.

Bei der vorteilhaften Ausführungsform mit den Merkmalen des Patentanspruchs 3 wird ein geringer Verzug und ein geringes Anlaufen des Behälterkörpers erreicht. Dadurch ist nur eine geringe Nachbearbeitung erforderlich.

Eine weitere vorteilhafte Ausführungsform der vorliegenden Erfindung weist die Merkmale des Patentanspruchs 4 auf. Dabei kann die Außenverzahnung vorteilhafterweise an der Durchführungsbuchse aus thermoplastischem Kunststoff angeformt sein, wobei die Innenverzahnung in die Bodenöffnung des aus Edelstahl hergestellt Behälterkörpers ausgestanzt ist. Durch die vorteilhafte Weiterbildung mit den Merkmalen des Patentanspruchs 5 wird eine sogenannte "Fail Safe" Funktion gewährleistet, d.h. der Behälterkörper und der Behälterfuß lassen sich nur in einer vorgegebenen Stellung miteinander verbinden. In dieser Stellung sind die Schweißlaschen und die Metallschürze in Deckung, so daß sie durch Punktschweißen miteinander verbunden werden können.

Schließlich sieht eine weitere vorteilhafte Ausführungsform der Erfindung eine Ausgestaltung mit den Merkmalen des Patentanspruchs 6 vor. Dabei kann der Halterand quasi als Bajonettverschluß ausgebildet sein, der mit einem Gegenstück an der Küchenmaschine zusammenwirkt.

Besonders vorteilhaft ist es, wenn der Behälterfuß gemäß Patentanspruch 7 als Spritzgußteil hergestellt ist. Dabei kann jeder geeignete thermoplastische Kunststoff, wie beispielsweise Styrol-Acrylnitril, zur Anwendung kommen. Insbesondere lassen sich dadurch eine geringe Anzahl von Bauteilen, vorzugsweise ein einstückiges Bauteil, und komplizierte Formen kostengünstig realisieren.

Eine weitere vorteilhafte Ausführungsform der Erfindung weist die Merkmale des Patentanspruchs 8 auf. Dabei kann die Innenwand der Durchführungsbuchse Nuten aufweisen, die eine leichtere Montage des Gleitlagers ermöglichen.

Noch eine vorteilhafte Weiterbildung der vorliegenden Erfindung sieht die Merkmale des Patentanspruchs 9 vor. Der Behälterrand ist dabei beispielsweise halbkreisförmig mit ausgestellten Griffteilen ausgebildet. Dadurch ist auf der dem Antriebsteil der Küchenmaschine zugewandten Seite kein störender Rand am Arbeitsbehälter vorhanden.

Eine vorteilhafte Ausgestaltungen des erfindungsgemäßen Arbeitsbehälters sieht die Merkmale des Patentanspruchs 10 vor. Hierdurch wird eine kostengünstige Dichtung hergestellt, die auch gegenüber größeren Mengen Flüssigkeit sicher und zuverlässig abdichtet.

Gemäß Patentanspruch 11 wird ein hygienisch und optisch ansprechender Übergang von einer, beispielsweise aus Kunststoff hergestellten, Abdeckhülse zu dem aus Metall, beispielsweise Edelstahl, hergestellten Behälterkörper zur Verfügung gestellt. Die Abdeckhülse kann dabei als Spritzgußteil hergestellt sein, da dies besonders kostengünstig ist. Bei entsprechender Auswahl des thermoplastischen Kunststoffs läßt sich dieser gemäß Patentanspruch 12 mit der Durchführungsbuchse beispielsweise durch Verschweißen oder Verkleben verbinden. Durch die Verbindung der Durchführungsbuchse mit der Abdeckhülse wird der als O-Ring ausgebildete Dichtring bei der Endmontage vorgespannt.

Ein vorteilhaftes Verfahren zur Herstellung eines erfindungsgemäßen Arbeitsbehälters für eine Küchenmaschine ist in Patentanspruch 13 beschrieben. Dabei werden durch das Polieren des Behälterkörpers Anlaufstellen, die durch das befestigen der Schweißlaschen am Behälterboden mittels Punktschweißen entstandenen sind, entfernt. Die mit dem, vorzugsweise als Spritzgußteil hergestellten, Behälterfuß verbundene Metallschürze ist mit diesem in Richtung der Behältermittelachse axial fixiert. Dabei erfolgt die Verriegelung quasi wie bei einem Bajonettverschluß, d.h. durch Einführen der Metallschürze bzw. der daran angebrachten Haltelaschen in entsprechende Aufnahmen. Um die Dichtung zwischen Behälterkörper und Behälterfuß zu verbessern, ist eine O-Ring Dichtung an der Durchführungsbuchse vorgesehen. Beim Einführen der Durchführungsbuchse in die Bodenöffnung des Behälterkörpers greift die Außenverzahnung der Durchführungsbuchse in die entsprechende Innenverzahnung der Bodenöffnung ein, wobei die Montage nur in einer vorgegebenen Stellung möglich ist. Hierdurch werden die am Behälterkörper angebrachten Schweißlaschen in Deckung mit entsprechend zugänglichen Stellen der Metallschürze gebracht. Auf diese Weise können die Metallschürze und die Schweißlaschen durch Punktschweißen miteinander verbunden werden. Als letzter Schritt wird eine entsprechende Abdeckhülse von innen über die Durchführungsbuchse geschoben und mit dieser verbunden, z.B. verklebt oder verschweißt.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine teilweise geschnittene schematische Explosionsdarstellung einer vorteilhaften Ausführungsform eines erfindungsgemäßen Arbeitsbehälters;
- Fig. 2: den Arbeitsbehälter aus Fig. 1 in teilmontiertem Zustand;
- Fig. 3: einen Deckel für den Arbeitsbehälter aus Figuren 1 und 2.

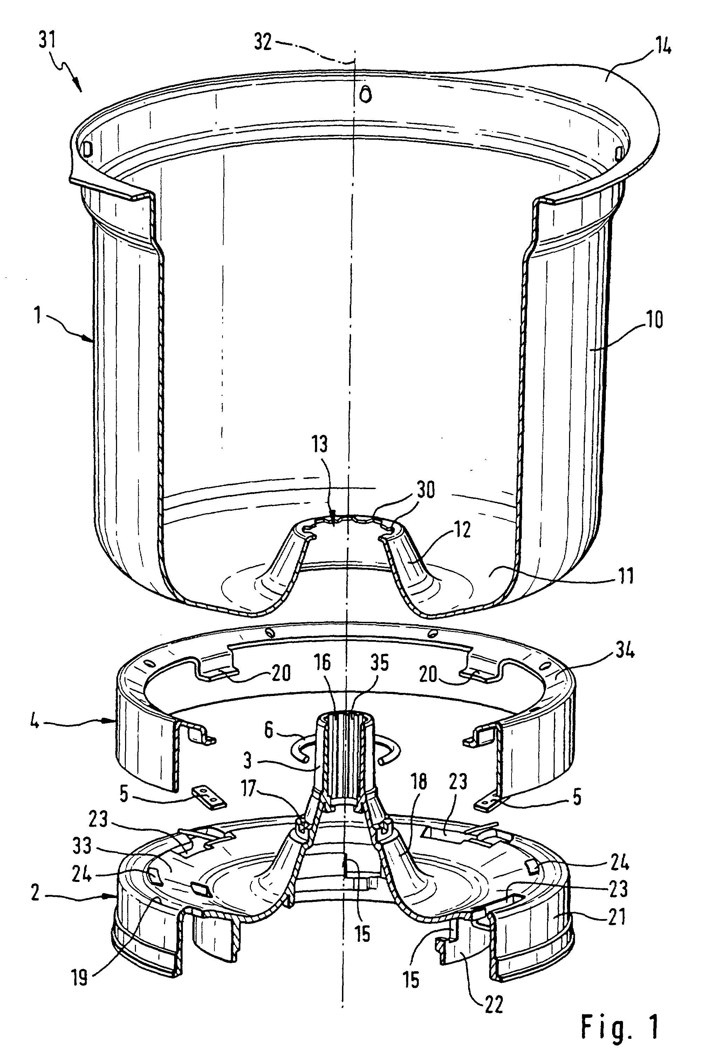

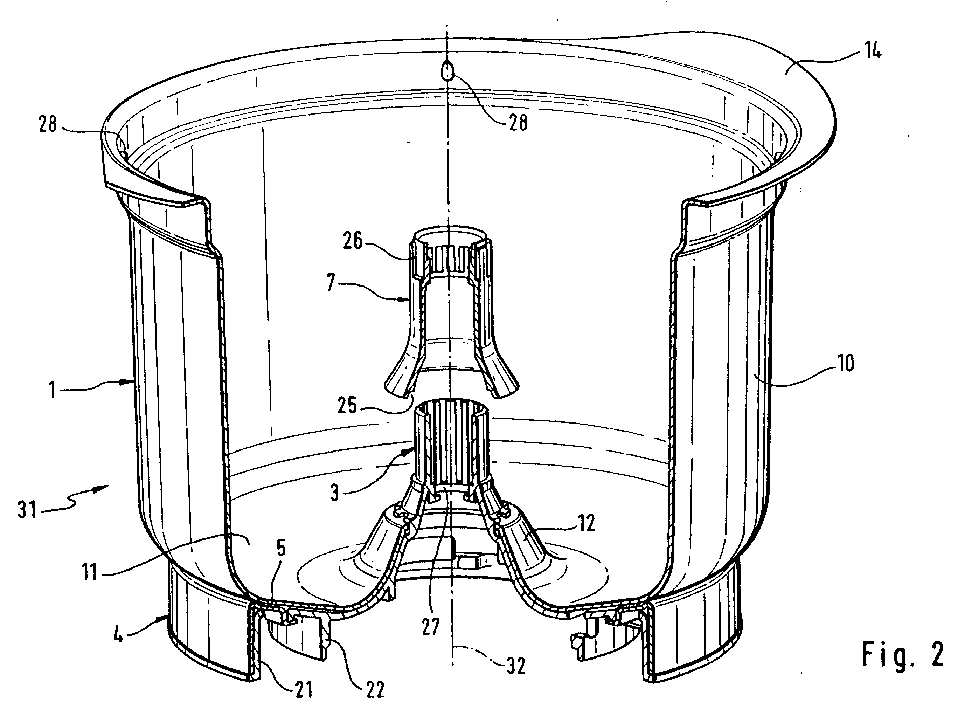

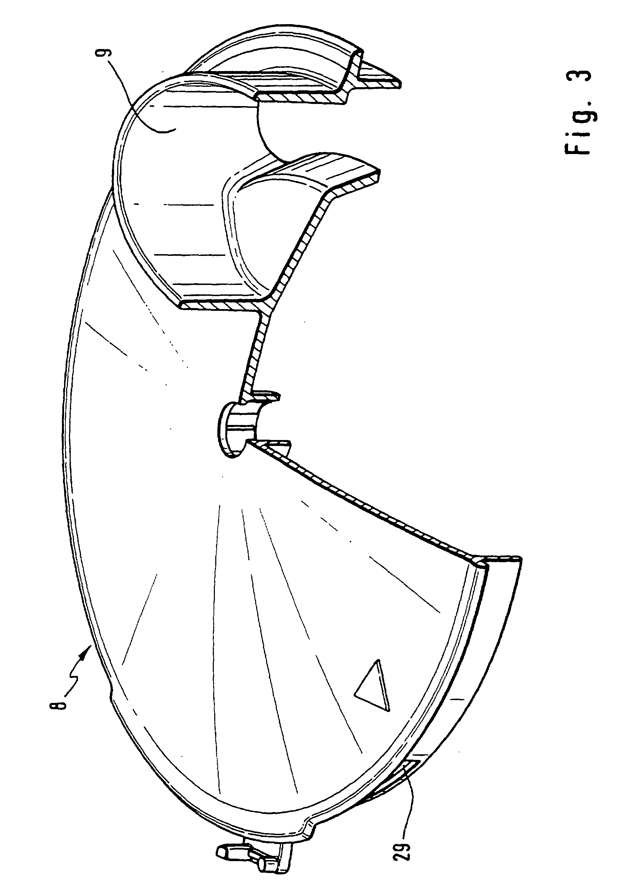

Fig. 1 zeigt eine perspektivische Explosionsdarstellung einer vorteilhaften Ausführungsform eines erfindungsgemäßen Arbeitsbehälters 31, der in Fig. 2 in teilmontiertem Zustand dargestellt ist. Dabei ist der Arbeitsbehälter 31 im wesentlichen aus einem Behälterkörper 1, einem Behälterfuß 2, einer Metallschürze 4 und einer in Fig. 2 gezeigten Abdeckhülse 7 gebildet. Ferner ist noch ein Behälterdeckel 8 vorgesehen, wie in Fig. 3 gezeigt.

Der im wesentlichen hohlzylinderförmige Behälterkörper 1 weist nach den Figuren 1 und 2 eine Behälterwandung 10 und an seiner Unterseite einen rinnenförmigen Behälterboden 11 auf. In Richtung der Behältermittelachse 32 steigt der Behälterboden 11 allmählich an und bildet eine Aufstülpung 12, die in eine kreisrunde Bodenöffnung 13 mündet. Diese Bodenöffnung 13 weist eine Innenverzahnung 30 auf. An seinem oberen offenen Ende weist der Behalterkörper 1 einen Behälterrand 14 auf, der einstückig mit dem Behälterkörper 1 ausgebildet ist. Der Behälterkörper 1 ist insgesamt als einstückiges Tiefziehteil aus Edelstahl ausgebildet und ist im Bereich der Bodenöffnung 13 ausgestanzt.

Der Behälterfuß 2 ist als Spritzgußteil aus einem geeigneten thermoplastischen Kunststoff hergestellt. Er weist nach den Figuren 1 und 2 einen ringförmigen Abstellrand 21 auf, dessen oberer Rand als Metallschürzenauflage 19 dient. Die leicht rinnenförmig ausgebildete Oberseite des Behälterfußes 2 steigt in Richtung der Behältermittelachse 32 zu einem Konus 18 an, der in eine senkrecht nach oben hervorstehende Durchführungsbuchse 3 für eine Werkzeugwelle mündet. An der Unterseite der rinnenförmigen Oberfläche des Behälterfußes 2 ist ein konzentrisch zu dem Abstellrand 21 verlaufender Halterand 22 ausgebildet, der einen kleineren Radius als der Abstellrand 21 aufweist. Dieser Halterand 22 weist Verriegelungsaufnahmen 15 auf, die als Aussparungen zur Aufnahme von an einer Küchenmaschine (nicht dargestellt) angebrachten Halteelementen (nicht dargestellt) ausgebildet sind, so wie dies bei der von der Anmelderin selbst vertriebenen Küchenmaschine "Braun Multisystem K1000" (siehe Braun-Katalog "Qualität in guter Vorm", Ausgabe 1999/2000) der Fall ist.

Ferner sind nach Fig. 1 an der Oberfläche 33 des Behälterfußes 2 am Außenumfang verteilt vier Haltelaschenaufnahmen 23 angeordnet. Ebenfalls über den Umfang verteilt sind zwischen den Haltelaschenaufnahmen 23 vier Behälterauflagen 24 für den Behälterkörper 1 angeordnet, die als leicht erhabene Wülste ausgebildet sind.

Eine ringförmige Metallschürze 4 ist als Tiefziehteil aus Edelstahl hergestellt. An ihrem oberen Innenumfang weist die Metallschürze 4 über den Umfang verteilte Haltelaschen 20 mit jeweils L-förmigem Querschnitt auf. Die Metallschürze 4 sitzt mit ihrem oberen leicht nach innen abgeschrägten Rand 34 auf der Metallschürzenauflage 19 des Behälterfußes 2 auf. Dabei greifen die Haltelaschen 20 in die Haltelaschenaufnahmen 23 ein. Durch Verdrehen der Metallschürze 4 im Uhrzeigersinn, wird diese in Bezug zur Behälterkörpermittelachse 32 axial verriegelt.

Am Behälterboden 11 sind mit den Haltelaschen 20 korrespondierende Schweißlaschen 5 durch Punktschweißen verbunden. Der Behälterkörper 1 wird nach Anbringen der Schweißlaschen 5 poliert, um Anlaufstellen, die durch das Schweißen entstanden sind, zu entfernen. Dann werden der Behälterkörper 1 und der Behälterfuß 2 so zusammengeführt, daß die Innenverzahnung 30 der Bodenöffnung 13 mit der Außenverzahnung 17 der Durchführungsbuchse 3 in Eingriff steht. Hierdurch sind die Metallschürze 4 und die Schweißlaschen 5 so zueinander positioniert, daß sie durch Punktschweißen miteinander verbunden werden können. Durch das Punktschweißen wird der Behälterfuß 2 und damit auch die Metallschürze 4 gegen Verdrehen gesichert und der Behälterkörper 1 sicher, stabil und unlösbar mit dem Behälterfuß 2 verbunden.

Um ein Auslaufen von Flüssigkeit aus dem Behälterkörper 1 durch die Bodenöffnung 13 zu verhindern, ist ein Dichtungsring 6, der als O-Ring aus Gummi oder aus einem sonst elastischen Dichtungsmaterial ausgebildet ist, vorgesehen. Dieser Dichtungsring 6 ist unterhalb der Bodenöffnung 13 an der Durchführungsbuchse 3 angeordnet und wird von außen durch die Aufstülpung 12 am Behälterboden 11 umgeben. Das so zwischenmontierte Bauteil ist in Fig. 2 dargestellt. Um ein Anlagern von Lebensmittelresten zu vermeiden, ist von oben außerdem eine Abdeckhülse 7 auf die Durchführungsbuchse 3 aufgesetzt. Die Abdeckhülse 7 weist dabei an ihrem unteren konusförmig ausgebildeten Rand eine umlaufende Nut 25 auf, die den oberen Rand der am Behälterboden 11 ausgebildete Aufstülpung 12 überdeckt. Dabei ist die Abdeckhülse 7 mit der Durchführungsbuchse 3 verschweißt. Alternativ kann die Abdeckhülse 7 mit der Durchführungsbuchse 3 auch verklebt oder verschraubt sein.

Ferner weist der Behälterkörper 1 an seinem oberen Innenumfang Verriegelungsnasen 28 auf, die nach innen radial hervorstehen. Diese Verriegelungsnasen 28 dienen dem Eingriff in am Behälterdeckel 8 angeordnete Verriegelungsschlitze 29, wie in Fig. 3 dargestellt. Der Behälterdeckel 8 kann dadurch wie ein Bajonettverschluß verriegelt werden. Ferner weist der Behälterdeckel 8 einen exzentrisch angeordneten Zufuhrschacht 9 auf, durch den entsprechende Lebensmittel dem Arbeitsbehälter zugeführt werden können. Durch die einfache und klare Form des Behälterdeckels 8 sowie durch den niedrigen Aufbau des Zufuhrschachts 9, ist der Behälterdeckel 8 auch leicht in der Spülmaschine oder mit der Hand zu reinigen. Um zu verhindern, daß eingefüllte Lebensmittel auf das Rührgetriebe fällt, ist innerhalb des Zufuhrschachts 9 eine Abdeckwand vorgesehen. Dadurch wird gewährleistet, daß die zugeführten Lebensmittel direkt in den Arbeitsbereich der Werkzeuge gelangen.

Im Betrieb wird der Arbeitsbehälter an einer Küchenmaschine über den Halterand 22 verriegelt. Eine in der Durchführungsbuchse 3 drehbar gelagerte Arbeitswelle (nicht dargestellt) wird durch eine am unteren Ende der Durchführungsbuchse 3 angeordnete Durchgangsbohrung 27 hindurchgeführt und im Wellenlager 16 gelagert. Das Wellenlager 16 ist dabei als Gleitlager ausgeführt, wobei längliche Schmiertaschen 35 vorgesehen sind.

Der Arbeitsbehälter 31 steht während des Betriebs auf seinem Abstellrand 21 auf. Ferner ist am Behälterkörper 1 an dessen oberem offenem Ende ein unsymmetrisch ausgebildeter Behälterrand 14 vorgesehen, der die Montage des Arbeitsbehälters 31 auf der Küchenmaschine nur in einer vorbestimmten Position erlaubt. Der Behälterrand 14 erfüllt ferner die Funktion eines Haltegriffes, wodurch der Arbeitsbehälter 31 leichter zu handhaben ist.

## Patentansprüche

1. Arbeitsbehälter (31) für eine Küchenmaschine, wobei dieser einen Behälterkörper (1) mit Wandung (10) und Boden (11) aus Metall, einen Behälterfuß (2) und eine zentrale Durchführungsbuchse (3) für eine Werkzeugwelle aufweist,
**dadurch gekennzeichnet,**
**daß** eine Metallschürze (4) vorgesehen ist, die den Behälterfuß (2) umgibt und über die der Behälterkörper (1) mit dem Behälterfuß (2) verbunden ist.

2. Arbeitsbehälter für eine Küchenmaschine nach Anspruch 1,
**dadurch gekennzeichnet,**
**daß** die Metallschürze (4) mit dem Behälterfuß (2) mittels eines Bajonettverschlusses verriegelt ist.

3. Arbeitsbehälter für eine Küchenmaschine nach Anspruch 1 oder 2,
**dadurch gekennzeichnet,**
**daß** der Behälterkörper (1) am Boden (11) durch Punktschweißen mit Schweißlaschen (5) verbunden ist.

4. Arbeitsbehälter für eine Küchenmaschine nach einem der vorangehenden Ansprüche,
**dadurch gekennzeichnet,**
**daß** die Durchführungsbuchse (3) an ihrem oberen Ende eine Außenverzahnung (17) zum Eingriff in die Innenverzahnung (30) der Bodenöffnung (13) aufweist.

5. Arbeitsbehälter für eine Küchenmaschine nach Anspruch 4,
**dadurch gekennzeichnet,**
**daß** die Außenverzahnung (17) mit der Innenverzahnung (30) nur in einer vorgegebenen Stellung in Eingriff bringbar ist.

6. Arbeitsbehälter für eine Küchenmaschine nach einem der vorangehenden Ansprüche,
**dadurch gekennzeichnet,**
**daß** am Behälterfuß (2) ein ringförmiger Halterand (22) zum Verriegeln des Arbeitsbehälters an der Küchenmaschine vorgesehen ist.

7. Arbeitsbehälter für eine Küchenmaschine nach einem der vorangehenden Ansprüche,
**dadurch gekennzeichnet,**
**daß** der Behälterfuß (2) als Spritzgußteil hergestellt ist.

8. Arbeitsbehälter für eine Küchenmaschine nach einem der vorangehenden Ansprüche,
**dadurch gekennzeichnet,**
**daß** die Durchführungsbuchse (3) ein Gleitlager zur Lagerung einer Werkzeugwelle aufnehmen kann.

9. Arbeitsbehälter für eine Küchenmaschine nach einem der vorangehenden Ansprüche,
**dadurch gekennzeichnet,**
**daß** der Behälterrand (14) derart ausgebildet ist, daß der Arbeitsbehälter nur in einer vorgegebenen Stellung montierbar ist.

10. Arbeitsbehälter für eine Küchenmaschine nach einem der vorangehenden Ansprüche,
**dadurch gekennzeichnet,**
**daß** ein Dichtungsring (6) zwischen der Durchführungsbuchse (3) und einer Aufstülpung (12) am Behälterboden (11) vorgesehen ist.

11. Arbeitsbehälter für eine Küchenmaschine nach Anspruch 10,
**dadurch gekennzeichnet,**
**daß** eine Abdeckhülse (7) als Aufsatz für die Durchführungsbuchse (3) vorgesehen ist.

12. Arbeitsbehälter für eine Küchenmaschine nach einem der vorangehenden Ansprüche,
**dadurch gekennzeichnet,**
**daß** die Abdeckhülse (7) mit der Durchführungsbuchse (3) kraftschlüssig verbunden ist.

13. Verfahren zum Herstellen eines Arbeitsbehälters für eine Küchenmaschine, der aus einem Behälterkörper mit Wandung und Boden aus Metall, aus einem Behälterfuß (2) aus Kunststoff, aus einer zentralen Durchführungsbuchse (3) für ein Gleitlager und aus einer Metallschürze (4) besteht, welches folgende Schritte aufweist:
Befestigen von Schweißlaschen (5) am Behälterboden (11) durch Punktschweißen; Polieren des Behälterkörpers (1);
Verriegeln der Metallschürze (4) mit dem Behälterfuß (2);
Anbringen einer O-Ring Dichtung an der Durchführungsbuchse (3);
Einführen der Durchführungsbuchse (3) in die Bodenöffnung (13) des Behälterkörpers (1);
Befestigen der Schweißlaschen (5) an der Metallschürze (4) durch Schweißen, vorzugsweise Punktschweißen; und
Anbringen einer Abdeckhülse (7) von der Behälterinnenseite und kraftschlüssige Verbindung dieser mit der Durchführungsbuchse.

## Claims

1. A work bowl (31) for a kitchen machine, wherein said bowl has a body (1) with a wall (10) and base (11) made of metal, a bowl foot (2) and a central feed-through bushing (3) for a tool shaft,
**characterised in**
**that** there is provided a metal apron (4) which surrounds the bowl foot (2) and via which the bowl body (1) is joined to the bowl foot (2).

2. The work bowl for a kitchen machine according to claim 1,
**characterised in**
**that** the metal apron (4) is interlocked with the bowl foot (2) by means of a bayonet catch.

3. The work bowl for a kitchen machine according to claim 1 or claim 2,
**characterised in**
**that** the bowl body (1) is joined to the base (11) by spot welding using welding lugs (5).

4. The work bowl for a kitchen machine according to any one of the preceding claims,
**characterised in**
**that** the feed-through bushing (3) has an outer tooth construction (17) at its upper end for engagement in the inner tooth construction (30) of the base opening (13).

5. The work bowl for a kitchen machine according to claim 4,
**characterised in**
**that** the outer tooth construction (17) can only be brought into engagement with the inner tooth construction (30) in a pre-determined position.

6. The work bowl for a kitchen machine according to any one of the preceding claims,
**characterised in**
**that** on the bowl foot (2) there is provided an annular retaining edge (22) for locking the work bowl to the kitchen machine.

7. The work bowl for a kitchen machine according to any one of the preceding claims,
**characterised in**
**that** the bowl foot (2) is manufactured as an injection moulded part.

8. The work bowl for a kitchen machine according to any one of the preceding claims,
**characterised in**
**that** the feed-through bushing (3) can accommodate a sliding bearing for mounting a tool shaft.

9. The work bowl for a kitchen machine according to any one of the preceding claims,
**characterised in**
**that** the retaining edge (14) is constructed such that the work bowl can only be mounted in a pre-determined position.

10. The work bowl for a kitchen machine according to any one of the preceding claims,
**characterised in**
**that** a sealing ring (6) is provided between the feed-through bushing (3) and a turned up section (12) on the bowl base (11).

11. The work bowl for a kitchen machine according to Claim 10,
**characterised in**
**that** a cover sleeve (7) is provided as a headpiece for the feed-through bushing (3).

12. The work bowl for a kitchen machine according to any one of the preceding claims,
**characterised in**
**that** the cover sleeve (7) is joined to the feed-through bushing (3) in a force-locking fashion.

13. A method for manufacturing a work bowl for a kitchen machine comprising a bowl body with wall and base made of metal, a bowl foot (2) made of plastic, a central feed-through bushing (3) for a sliding bearing and a metal apron (4) which comprises the following steps:
affixing welding lugs (5) to the bowl base (11) by spot welding;
polishing the bowl body (1);
locking the metal apron (4) with the bowl foot (2);
attaching an O-ring seal to the feed-through bushing (3);
inserting the feed-through bushing (3) into the base opening (13) of the bowl body (1);
affixing the welding lugs (5) to the metal apron (4) by welding, preferably spot welding; and
attaching a cover sleeve (7) from the inside of the bowl and joining said sleeve to the feed-through bushing in a force-locking fashion.

## Revendications

1. Cuve fonctionnelle (31) pour un robot ménager, cette dernière présentant un corps de cuve (1) avec une paroi (10) et un fond (11) en métal, une embase de cuve (2) et une douille de traversée (3) pour l'axe d'un outil,
**caractérisée en ce que** un tablier métallique (4), entourant l'embase de la cuve (2) et par l'intermédiaire duquel le corps de la cuve (1) est relié avec l'embase de la cuve (2) est prévu.

2. Cuve fonctionnelle pour un robot ménager selon la revendication 1
**caractérisée en ce que** le tablier métallique (4) est verrouillé ave l'embase de la cuve (2) à l'aide d'une fermeture à baïonnette.

3. Cuve fonctionnelle pour un robot ménager selon l'une quelconque des revendications 1 ou 2,
**caractérisée en ce que** sur le fond (11), le corps de la cuve (1) est relié par points de soudure à des languettes à souder (5).

4. Cuve fonctionnelle pour un robot ménager selon l'une quelconque des revendications précédentes,
**caractérisée en ce que** la douille de traversée (3) présente sur son extrémité supérieure une denture externe (17) destinée à s'engrener dans la denture interne (30) de l'orifice du fond (13).

5. Cuve fonctionnelle pour un robot ménager selon la revendication 4,
**caractérisée en ce que** la denture externe (17) ne peut être amenée à s'engrener avec la denture interne (30) que dans une position prédéfinie.

6. Cuve fonctionnelle pour un robot ménager selon l'une quelconque des revendications précédentes,
**caractérisée en ce que** un bord de maintien annulaire (22) destiné à verrouiller le cuve fonctionnelle sur le robot ménager est prévu sur l'embase de la cuve (2).

7. Cuve fonctionnelle pour un robot ménager selon l'une quelconque des revendications précédentes,
**caractérisée en ce que** l'embase de la cuve (2) est fabriquée sous forme de pièce moulée par injection.

8. Cuve fonctionnelle pour un robot ménager selon l'une quelconque des revendications précédentes,
**caractérisée en ce que** la douille de traversée (3) peut réceptionner un palier lisse destiné à loger un axe d'outil.

9. Cuve fonctionnelle pour un robot ménager selon l'une quelconque des revendications précédentes,
**caractérisée en ce que** le bord de la cuve (14) est conçu de façon à ce que la cuve fonctionnelle ne puisse être montée que dans une position prédéfinie.

10. Cuve fonctionnelle pour un robot ménager selon l'une quelconque des revendications précédentes,
**caractérisée en ce qu'**une bague d'étanchéité (6) est prévue entre la douille de traversée (3) et une collerette (12) ménagée sur le fond de la cuve (11).

11. Cuve fonctionnelle pour un robot ménager selon la revendication 10,
**caractérisée en ce qu'**une douille de recouvrement (7) est prévue sous forme de pièce à rapporter sur la douille de traversée (3).

12. Cuve fonctionnelle pour un robot ménager selon l'une quelconque des revendications précédentes,
**caractérisée en ce que** la douille de recouvrement (7) est reliée par gravité avec la douille de traversée (3).

13. Procédé de fabrication d'une cuve fonctionnelle pour un robot ménager, constitué d'un corps de cuve avec une paroi et un fond en métal, d'une embase de cuve (2) en matière plastique, d'une douille de traversée centrale (3) pour un palier lisse et d'un tablier métallique (4), présentant les étapes suivantes :
Fixation de languettes à souder (5) sur le fond de la cuve (11), par points de soudure ; polissage du corps de la cuve (1) ;
Verrouillage du tablier métallique (4) avec l'embase de la cuve (2) ;
Application d'un joint torique sur la douille de traversée (3) ;
Insertion de la douille de traversée (3) dans l'orifice ménagé dans le fond (13) du corps de la cuve (1) ;
Fixation des languettes à souder (5) sur le tablier métallique (4) par soudage, de préférence par points de soudure ; et
Montage d'une douille de recouvrement (7) de la face interne de la cuve et liaison par gravité de cette dernière avec la douille de traversée.
